# EUROPEAN PATENT APPLICATION

(11) **EP 4 408 113 A1**
(43) Date of publication of application: **31.07.2024**
(21) Application number: 22891819.9
(22) Date of filing: 28.10.2022
(51) Int. Cl.: H04W 74/08

(54) **DATA TRANSMISSION METHOD AND APPARATUS, STORAGE MEDIUM, AND PROGRAM PRODUCT**

(30) Priority: 12.11.2021 CN 202111345545
(71) Applicant: Huawei Technologies Co., Ltd., Shenzhen, Guangdong 518129 (CN)
(72) Inventor: YANG, Mao, Xi'an, Shaanxi 710072 (CN); YAN, Zhongjiang, Xi'an, Shaanxi 710072 (CN); LI, Yunbo, Shenzhen, Guangdong 518129 (CN)
(74) Representative: Körber, Martin Hans
(86) International application number: PCT/CN2022/128317
(87) International publication number: WO 2023/083023

(57) **Abstract**

This application discloses a data transmission method and apparatus, a storage medium, and a program product. The method includes: A second station sends a first frame to a first station, where the first frame indicates that the first station is allowed to perform access in a transmission opportunity shared by the second station. The first station receives the first frame, and sends a first response frame in response to the first frame. The first station performs channel contention in the transmission opportunity. In solutions of this application, after obtaining a channel through contention, the second station may indicate that the first station is allowed to perform access in the transmission opportunity shared by the second station. The first station may perform channel contention in the transmission opportunity shared by the second station, and perform channel contention in the transmission opportunity after sending the first response frame. This improves efficiency and reliability of channel contention.

## Description

This application claims priority to Chinese Patent Application No. 202111345545.2, filed with the China National Intellectual Property Administration on November 12, 2021 and entitled "DATA TRANSMISSION METHOD AND APPARATUS, STORAGE MEDIUM, AND PROGRAM PRODUCT", which is incorporated herein by reference in its entirety.

### TECHNICAL FIELD

This application relates to the field of communication technologies, and in particular, to a data transmission method and apparatus, a storage medium, and a program product.

### BACKGROUND

Currently, in a wireless local area network (wireless local area network, WLAN), to transmit data, any station needs to perform channel sensing. The data can be transmitted only when it is detected that a channel is idle. However, a channel sensing mechanism cannot resolve a collision problem caused by a hidden terminal, resulting in low sensing and contention efficiency.

### SUMMARY

This application provides a data transmission method and apparatus, a storage medium, and a program product, to improve efficiency and reliability of channel contention.

According to a first aspect, a data transmission method is provided. The method includes: A first station receives a first frame sent by a second station, where the first frame indicates that the first station is allowed to perform access in a transmission opportunity shared by the second station. The first station sends a first response frame in response to the first frame. The first station performs channel contention in the transmission opportunity. In this aspect, the first station may perform channel contention in the transmission opportunity shared by the second station, and perform channel contention in the transmission opportunity after sending the first response frame. This improves efficiency and reliability of channel contention.

According to a second aspect, a data transmission method is provided. The method includes: A second station sends a first frame, where the first frame indicates that a first station is allowed to perform access in a transmission opportunity shared by the second station. The second station receives a first response frame sent by the first station. In this aspect, after obtaining a channel through contention, the second station may indicate that the first station is allowed to perform access in the transmission opportunity shared by the second station. This improves efficiency and reliability of performing channel contention by the first station.

With reference to the first aspect or the second aspect, in a possible implementation, the first frame is a multi-user request to send transmission opportunity sharing MU-RTS TXS trigger frame. The first frame includes a first field. When the first field is a first value, it indicates that the first station is allowed to perform access in the transmission opportunity. In this implementation, the first frame is a new-type MU-RTS TXS trigger frame. When a value of the first field in the MU-RTS TXS trigger frame is the first value, in this application, it indicates that the first station is allowed to perform access in the transmission opportunity.

With reference to the first aspect or the second aspect or the possible implementation of the first aspect or the second aspect, in another possible implementation, the first field is a transmission opportunity sharing mode field.

With reference to the first aspect or the second aspect or the possible implementations of the first aspect or the second aspect, in still another possible implementation, the first frame further includes a second field. The second field includes at least one of the following: an identifier of the scheduled first station, an identifier of a scheduled station group, information about a service allowed to be transmitted in the transmission opportunity, and an indication indicating whether point-to-point transmission is allowed to be performed in the transmission opportunity. In this implementation, when accurately determining, by using the second field, the first station or the station group in which the first station is located, or that the first station includes a service, the first station may perform access in the transmission opportunity. This improves flexibility and accuracy of scheduling.

With reference to the first aspect or the second aspect or the possible implementations of the first aspect or the second aspect, in still another possible implementation, the information about the service allowed to be transmitted in the transmission opportunity includes at least one of the following: an identifier of the service allowed to be transmitted in the transmission opportunity, and a tolerable delay threshold of the service allowed to be transmitted in the transmission opportunity. In this implementation, strict requirements are imposed on delay characteristics of some services, for example, online games, virtual reality, and industrial sites. These specific services may be allowed to be preferentially transmitted in the transmission opportunity. Therefore, the second field may further include the information about the service allowed to be transmitted in the transmission opportunity. For example, each of the first station and the second station may pre-store a correspondence between an identifier of a service and the service. After receiving the first frame, the first station obtains through parsing, in the second field, the identifier of the service allowed to be transmitted in the transmission opportunity, and may determine whether to allow access of the service. For example, after receiving the first frame, the first station obtains through parsing the tolerable delay threshold that is in the second field and that is of the service allowed to be transmitted in the transmission opportunity, and determines tolerable delay of specific services in services that are being performed by the first station is less than or equal to the tolerable delay threshold. Therefore, when data of the service is to be transmitted, channel contention may be performed in the transmission opportunity.

With reference to the first aspect or the possible implementations of the first aspect, in still another possible implementation, the method further includes: The first station sets a value of an intra-basic service set network allocation vector intra-BSS NAV to 0. In this implementation, the first station may set the value of the intra-BSS NAV of the first station to 0, to perform channel contention in the transmission opportunity shared by the second station.

With reference to the first aspect or the possible implementations of the first aspect, in still another possible implementation, that the first station sends a first response frame in response to the first frame includes: The first station sends the first response frame after a short inter-frame space starting from a moment of receiving the first frame.

With reference to the first aspect or the possible implementation of the first aspect, in still another possible implementation, the method further includes: The first station receives a second response frame sent by a third station, and skips setting the intra-BSS NAV based on the second response frame. That the first station performs channel contention in the transmission opportunity includes: When it is detected that a channel is idle, and a value of a basic NAV is 0, the first station performs channel contention in the transmission opportunity. In this implementation, the first station scheduled by using the first frame may have correctly parsed the first frame, but cannot reply with the first response frame because the first station detects that the channel is busy, or the value of the basic NAV is not 0. However, the first station may receive a CTS frame sent by another station. The first station skips setting the intra-BSS NAV based on the second response frame, in other words, the value of the intra-BSS NAV is still 0.

With reference to the first aspect or the possible implementations of the first aspect, in still another possible implementation, that the first station performs channel contention in the transmission opportunity includes: The first station starts a first timer, where an initial value of the first timer is first duration indicated by a duration (Duration) field of the first frame. The first station performs channel contention when a value of the first timer is not equal to 0, and stops transmission when the value of the first timer is 0. In this implementation, the first station may perform channel contention when the value of the first timer is not equal to 0 (in other words, the first timer does not expire), and stop transmission when the value of the first timer is 0 (in other words, the first timer expires). An objective of stopping transmission is as follows: After the first duration ends, the first station and another station that cannot participate in the shared transmission opportunity perform channel contention together, to ensure channel access fairness between the first station and the another station.

With reference to the first aspect or the possible implementations of the first aspect, in still another possible implementation, the method further includes: The first station performs channel contention in second duration, and stops transmission before the second duration ends. A duration (Duration) field of the first frame further indicates the second duration; or the first frame further includes a third field, and the third field indicates the second duration. In this implementation, the first station performs channel contention in the second duration, and stops transmission before the second duration ends. Further, after the second duration ends, the first station and the third station are disallowed to perform channel contention, to restore a right of use of a channel to the first station with a priority.

With reference to the first aspect or the possible implementations of the first aspect, in still another possible implementation, the first frame further includes the third field and the duration (Duration) field. The third field indicates the second duration allocated to the first station for performing channel contention in the transmission opportunity, and the duration field indicates first duration. The first duration is duration corresponding to the transmission opportunity shared by the second station, and the first duration is greater than or equal to the second duration. The method further includes: The first station starts a second timer, where an initial value of the second timer is equal to the first duration, and sets the intra-BSS NAV to 0. The first station is disallowed to initiate channel contention after the second duration ends and when a value of the second counter is not equal to 0. In this implementation, the first station performs channel contention in the second duration, and stops transmission before the second duration ends. After the second duration ends, and when the value of the second counter is not equal to 0 (in other words, the second timer does not expire), the first station and the third station need to restore intra-BSS NAVs, in other words, channel contention is disallowed to be initiated. This improves efficiency and reliability of channel contention.

With reference to the first aspect or the possible implementation of the first aspect, in still another possible implementation, that the first station performs channel contention in the transmission opportunity includes: in second duration allocated to the first station for performing channel contention in the transmission opportunity, if values of a basic NAV and an intra-BSS TXS NAV are both equal to 0, and a channel sensing result is idle, allowing the first station to perform channel contention, where the intra-BSS TXS NAV is different from an intra-BSS NAV A duration field further indicates the second duration; or the first frame further includes a third field, and the third field indicates the second duration. In this implementation, after obtaining a channel through contention, the second station may indicate that the first station is allowed to perform access in the transmission opportunity shared by the second station. The first station retains the intra-BSS NAV of the first station, and sets the intra-BSS TXS NAV when another scheduled station performs data transmission, to avoid a channel conflict. This improves efficiency and reliability of channel contention.

With reference to the first aspect or the possible implementation of the first aspect, in still another possible implementation, the method further includes: After receiving the first frame, the first station starts an intra-BSS TXS NAV timer, where the intra-BSS TXS NAV timer is initialized to 0; and if the first station receives an intra-BSS PPDU in the second duration, and duration indicated by a duration field of the intra-BSS PPDU is greater than duration of the intra-BSS TXS NAV, updates the intra-BSS TXS NAV based on a value of the duration field of the intra-BSS PPDU.

With reference to the first aspect or the possible implementations of the first aspect, in still another possible implementation, the method further includes: The first station receives a second response frame sent by a third station, and skips setting the intra-BSS TXS NAV based on the second response frame. That the first station performs channel contention in the transmission opportunity includes: When it is detected that the channel is idle, and the values of the basic NAV and the intra-BSS TXS NAV are both 0, the first station performs channel contention in the transmission opportunity. In this implementation, after obtaining the channel through contention, the second station may indicate that the first station is allowed to perform access in the transmission opportunity shared by the second station. The first station receives a response frame returned by another station scheduled by the second station, and skips setting the intra-BSS TXS NAV based on the response frame. Therefore, the first station may perform channel contention after it is detected that the channel is idle, and the value of the basic NAV is 0. This improves efficiency and reliability of channel contention.

According to a third aspect, a data transmission apparatus is provided. The apparatus can implement the data transmission method in the first aspect. For example, the data transmission apparatus may be a chip or a device. The foregoing method may be implemented by software, hardware, or hardware executing corresponding software.

In a possible implementation, the apparatus includes a transceiver unit and a processing unit. The transceiver unit is configured to receive a first frame sent by a second station, where the first frame indicates that the data transmission apparatus is allowed to perform access in a transmission opportunity shared by the second station. The transceiver unit is further configured to send a first response frame in response to the first frame. The processing unit is configured to perform channel contention in the transmission opportunity.

Optionally, the first frame is a multi-user request to send transmission opportunity sharing MU-RTS TXS trigger frame. The first frame includes a first field. When the first field is a first value, it indicates that the data transmission apparatus is allowed to perform access in the transmission opportunity.

Optionally, the first field is a transmission opportunity sharing mode field.

Optionally, the first frame further includes a second field. The second field includes at least one of the following: an identifier of the scheduled data transmission apparatus, an identifier of a scheduled station group, information about a service allowed to be transmitted in the transmission opportunity, and an indication indicating whether point-to-point transmission is allowed to be performed in the transmission opportunity.

Optionally, the information about the service allowed to be transmitted in the transmission opportunity includes at least one of the following: an identifier of the service allowed to be transmitted in the transmission opportunity, and a tolerable delay threshold of the service allowed to be transmitted in the transmission opportunity.

Optionally, the processing unit is further configured to set a value of an intra-basic service set network allocation vector intra-BSS NAV to 0.

Optionally, the transceiver unit is further configured to send the first response frame after a short inter-frame space starting from a moment of receiving the first frame.

Optionally, the transceiver unit is further configured to receive a second response frame sent by a third station. The processing unit is further configured to skip setting the intra-BSS NAV based on the second response frame. The processing unit is further configured to: when it is detected that a channel is idle, and a value of a basic NAV is 0, perform channel contention in the transmission opportunity.

Optionally, the processing unit is further configured to start a first timer, where an initial value of the first timer is first duration indicated by a duration (Duration) field of the first frame. The processing unit is further configured to: perform channel contention when a value of the first timer is not equal to 0, and stop transmission when the value of the first timer is 0.

Optionally, the processing unit is further configured to: perform channel contention in second duration, and stop transmission before the second duration ends. A duration (duration) field of the first frame further indicates the second duration; or the first frame further includes a third field, and the third field indicates the second duration.

Optionally, the first frame further includes the third field and the duration (Duration) field. The third field indicates the second duration allocated to the data transmission apparatus for performing channel contention in the transmission opportunity, and the duration field indicates first duration. The first duration is duration corresponding to the transmission opportunity shared by the second station, and the first duration is greater than or equal to the second duration. The processing unit is further configured to: start a second timer, where an initial value of the second timer is equal to the first duration; and set the intra-BSS NAV to 0. The processing unit is further configured to disallow to initiate channel contention after the second duration ends and when a value of the second counter is not equal to 0.

Optionally, the processing unit is further configured to: in second duration allocated to the data transmission apparatus for performing channel contention in the transmission opportunity, if values of a basic NAV and an intra-BSS TXS NAV are both equal to 0, and a channel sensing result is idle, allow the data transmission apparatus to perform channel contention, where the intra-BSS TXS NAV is different from an intra-BSS NAV. A duration field further indicates the second duration; or the first frame further includes a third field, and the third field indicates the second duration.

Optionally, the processing unit is further configured to: after the transceiver unit receives the first frame, start an intra-BSS TXS NAV timer, where the intra-BSS TXS NAV timer is initialized to 0. The processing unit is further configured to: if the data transmission apparatus receives an intra-BSS PPDU in the second duration, and duration indicated by a duration field of the intra-BSS PPDU is greater than duration of the intra-BSS TXS NAV, update the intra-BSS TXS NAV based on a value of the duration field of the intra-BSS PPDU.

Optionally, the transceiver unit is further configured to receive a second response frame sent by a third station. The processing unit is further configured to skip setting the intra-BSS TXS NAV based on the second response frame. The processing unit is further configured to: when it is detected that a channel is idle, and the values of the basic NAV and the intra-BSS TXS NAV are both 0, perform channel contention in the transmission opportunity.

In another possible implementation, the data transmission apparatus is configured to perform the method in the first aspect and the possible implementations of the first aspect.

According to a fourth aspect, a data transmission apparatus is provided. The data transmission apparatus can implement the data transmission method in the second aspect. For example, the data transmission apparatus may be a chip or a device. The foregoing method may be implemented by software, hardware, or hardware executing corresponding software.

In a possible implementation, the apparatus includes a transceiver unit. The transceiver unit is configured to send a first frame, where the first frame indicates that a first station is allowed to perform access in a transmission opportunity shared by the data transmission apparatus. The transceiver unit is further configured to receive a first response frame sent by the first station.

Optionally, the first frame is a multi-user request to send transmission opportunity sharing MU-RTS TXS trigger frame. The first frame includes a first field. When the first field is a first value, it indicates that the first station is allowed to perform access in the transmission opportunity.

Optionally, the first field is a transmission opportunity sharing mode field.

Optionally, the first frame further includes a second field. The second field includes at least one of the following: an identifier of the scheduled first station, an identifier of a scheduled station group, information about a service allowed to be transmitted in the transmission opportunity, and an indication indicating whether point-to-point transmission is allowed to be performed in the transmission opportunity.

Optionally, the information about the service allowed to be transmitted in the transmission opportunity includes at least one of the following: an identifier of the service allowed to be transmitted in the transmission opportunity, and a tolerable delay threshold of the service allowed to be transmitted in the transmission opportunity.

In another possible implementation, the data transmission apparatus is configured to perform the method in the second aspect and the possible implementations of the second aspect.

In still another possible implementation, the data transmission apparatus in the third aspect or the fourth aspect includes a processor coupled to a memory. The processor is configured to support the apparatus in performing a corresponding function in the foregoing data transmission method. The memory is configured to be coupled to the processor, and stores a computer program (or computer-executable instructions) and/or data necessary for the apparatus. Optionally, the data transmission apparatus may further include a communication interface, configured to support communication between the apparatus and another network element, for example, data and/or signal sending or receiving. For example, the communication interface may be a transceiver, a circuit, a bus, a module, or a communication interface of another type. Optionally, the memory may be located inside the data transmission apparatus, and is integrated with the processor. The memory may alternatively be located outside the data transmission apparatus.

In still another possible implementation, the data transmission apparatus in the third aspect or the fourth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method through a logic circuit or executing code instructions. The transceiver apparatus may be a transceiver, a transceiver circuit, or an input/output interface, and is configured to receive a signal from a data transmission apparatus other than the data transmission apparatus and transmit the signal to the processor, or transmit a signal from the processor to a data transmission apparatus other than the data transmission apparatus. When the data transmission apparatus is a chip, the transceiver apparatus is a transceiver circuit or an input/output interface.

When the data transmission apparatus in the third aspect or the fourth aspect is a chip, a sending unit may be an output unit, for example, an output circuit or a communication interface, and a receiving unit may be an input unit, for example, an input circuit or a communication interface. When the data transmission apparatus is a terminal, a sending unit may be a transmitter or a transmitter machine, and a receiving unit may be a receiver or a receiver machine.

According to a fifth aspect, a communication system is provided. The communication system includes the data transmission apparatus according to any one of the third aspect or the implementations of the third aspect, and at least one data transmission apparatus according to any one of the fourth aspect or the implementations of the fourth aspect.

According to a sixth aspect, a computer-readable storage medium is provided. The computer-readable storage medium stores a computer program or instructions. When the program or the instructions is/are executed by a processor, the method according to any one of the first aspect or the implementations of the first aspect is performed, or the method according to any one of the second aspect or the implementations of the second aspect is performed.

According to a seventh aspect, a computer program product is provided. When the computer program product is executed on a computing device, the method according to any one of the first aspect or the implementations of the first aspect is performed, or the method according to any one of the second aspect or the implementations of the second aspect is performed.

### BRIEF DESCRIPTION OF DRAWINGS

FIG. 1 is a schematic diagram of a structure of a communication system to which an embodiment of this application is applicable;
FIG. 2 is a schematic diagram of virtual carrier sense and network allocation vector setting according to an embodiment of this application;
FIG. 3 is a schematic diagram of triggered transmission opportunity sharing according to an embodiment of this application;
FIG. 4 is a schematic flowchart of a data transmission method according to an embodiment of this application;
FIG. 5 is a schematic diagram of a structure of a basic frame according to an embodiment of this application;
FIG. 6 shows possible values of a transmission opportunity sharing mode field according to an embodiment of this application;
FIG. 7 is a schematic diagram of a format of a second field according to an embodiment of this application;
FIG. 8a is a schematic diagram of a format of another second field according to an embodiment of this application;
FIG. 8b is a schematic diagram of a format of still another second field according to an embodiment of this application;
FIG. 9 is a schematic diagram of a format of yet another second field according to an embodiment of this application;
FIG. 10 is a schematic flowchart of another data transmission method according to an embodiment of this application;
FIG. 11 is a schematic diagram of data transmission according to an embodiment of this application;
FIG. 12 is a schematic flowchart of still another data transmission method according to an embodiment of this application;
FIG. 13 is a schematic diagram of another data transmission according to an embodiment of this application;
FIG. 14 is a schematic diagram of still another data transmission according to an embodiment of this application;
FIG. 15 is a schematic flowchart of yet another data transmission method according to an embodiment of this application;
FIG. 16 is a schematic diagram of yet another data transmission according to an embodiment of this application;
FIG. 17 is a schematic flowchart of still yet another data transmission method according to an embodiment of this application;
FIG. 18 is a schematic diagram of still yet another data transmission according to an embodiment of this application;
FIG. 19 is a schematic flowchart of a further data transmission method according to an embodiment of this application;
FIG. 20 is a schematic diagram of further data transmission according to an embodiment of this application;
FIG. 21 is a schematic flowchart of a still further data transmission method according to an embodiment of this application;
FIG. 22 is a schematic diagram of a structure of a data transmission apparatus according to an embodiment of this application;
FIG. 23 is a schematic diagram of a structure of another data transmission apparatus according to an embodiment of this application;
FIG. 24 is a schematic diagram of a structure of still another data transmission apparatus according to an embodiment of this application; and
FIG. 25 is a schematic diagram of a structure of yet another data transmission apparatus according to an embodiment of this application.

### DESCRIPTION OF EMBODIMENTS

The following describes embodiments of this application with reference to accompanying drawings in embodiments of this application.

It should be understood that embodiments of this application may be used in WLAN communication. A standard version of a WLAN has been continuously evolved and developed from standards such as IEEE 802.11a/b/g/n/ac/ax, and 802.11be which is under discussion. The 802.11n standard is also called a high throughput (high throughput, HT), the 802.11ac standard is called a very high throughput (very high throughput, VHT), 802.11ax is called high efficiency (high efficient, HE), 802.1The is called an extremely high throughput (extremely high throughput, EHT), and standards before the HT, such as 802.11a/b/g, are collectively called a non-high throughput (Non-HT).

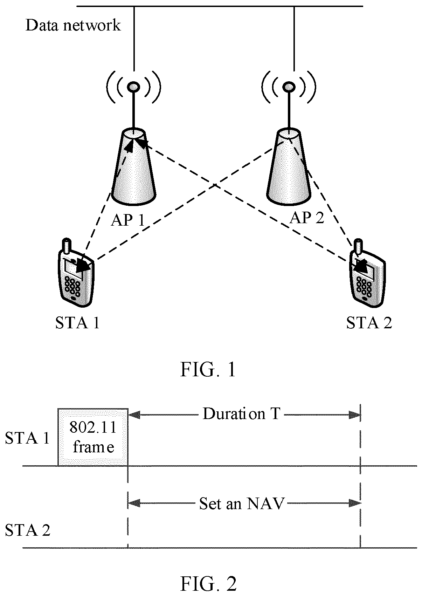

A WLAN communication system includes an access point (access point, AP) and a station (station, STA), and the station may also be referred to as a station or a non-access point (non-AP) station. Related wireless communication scenarios may include communication between an AP and a STA, communication between APs, communication between STAs, and the like. In embodiments of this application, communication between an AP and a STA is used as an example for description. As shown in FIG. 1, an AP 1 may perform wireless communication with a STA 1 and a STA 2, or an AP 2 may perform wireless communication with a STA 1 and a STA 2. For example, an AP and a STA associated with the AP may perform uplink and downlink communication according to the IEEE802.11 protocol, or certainly may perform communication according to another protocol. This is not limited in this application. The AP 1 and the AP 2 may access a data network in a wired or wireless manner. It should be understood that methods in embodiments of this application are also applicable to communication between APs, communication between STAs, and the like.

A structure of each of the AP and the STA in embodiments of this application may include a media access control (media access control, MAC) layer and a physical (physical, PHY) layer. Each of the AP and the STA may transmit a PPDU based on a physical layer protocol data unit (PHY Protocol Data Unit, PPDU). In addition, a frame structure of the PPDU varies with a wireless communication protocol used by the AP and the STA.

The following describes several concepts that may be involved in embodiments of this application.

Virtual carrier sense and network allocation vector (network allocation vector, NAV)

FIG. 2 is a schematic diagram of virtual carrier sense and NAV setting according to an embodiment of this application. It is assumed that a STA 1 sends an 802.11 frame, and a duration (Duration) field of media access control (media access control, MAC) layer signaling of the 802.11 frame carries duration T. This value indicates that the STA 1 expects to continuously perform sending or receiving in a future duration T after the frame ends, to protect a channel resource. Any other STA (for example, a STA 2) parses the 802.11 frame sent by STA 1, and learns that a value of the duration field in the 802.11 frame is T, and the STA 2 is not a destination address of the 802.11 frame. In addition, if a current NAV of the STA 2 is not set or a set end time is earlier than an end time corresponding to the duration field, the NAV needs to be set to T, and a backoff process is disallowed to be performed to attempt transmission in the future duration T.

### Triggered transmission opportunity sharing (triggered transmission opportunity sharing)

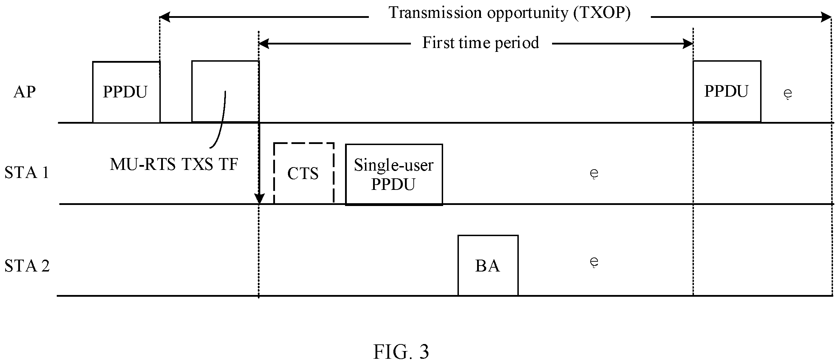

FIG. 3 is a schematic diagram of triggered transmission opportunity sharing according to an embodiment of this application. In the IEEE 802.11be standard, a transmission opportunity (transmission opportunity, TXOP) mechanism is extended, to be specific, an AP serving as a TXOP holder (holder) may send a special trigger frame (which is referred to as a multi-user request to send (multi-user request to send, MU-RTS) transmission opportunity sharing (TXOP sharing, TXS) trigger frame, or a TXS trigger frame for short) to allocate a part of time resources (namely, a first time period in FIG. 3) in a reserved TXOP to a STA 1. The STA 1 may send uplink data to the AP or perform point-to-point (point to point, P2P) transmission with a STA2 in allocated time. This mechanism is currently referred to as triggered transmission opportunity sharing (triggered TXOP sharing). The mechanism may be used to reduce collision caused by channel contention by the STA 1, and improve system efficiency. A P2P link used for P2P transmission herein is set up by two non-AP STAs through tunneled direct link setup (tunneled direct link setup, TDLS) or according to another P2P protocol. P2P may also be referred to as device-to-device (device-to-device, D2D), TDLS, or the like in other technical introductions. P2P, D2D, TDLS, and the like are essentially the same. This is not limited in this application.

This application provides a data transmission solution. After obtaining a channel through contention, a second station may indicate that a first station is allowed to perform access in a transmission opportunity shared by the second station. The first station may perform channel contention in the transmission opportunity shared by the second station, and perform channel contention in the transmission opportunity after sending a first response frame. This improves efficiency and reliability of channel contention.

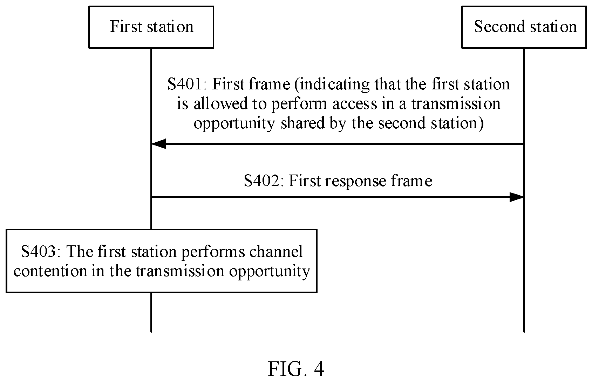

FIG. 4 is a schematic flowchart of a data transmission method according to an embodiment of this application. The method may include the following steps.

S401: A second station sends a first frame. The first frame indicates that a first station is allowed to perform access in a transmission opportunity shared by the second station.

Correspondingly, the first station receives the first frame sent by the second station.

The second station obtains a channel through contention according to an enhanced distributed channel access (enhanced distributed channel access, EDCA) mechanism, and occupies the channel in one transmission opportunity. The second station may share the transmission opportunity with another station associated with the second station. Therefore, the second station may send a first frame to one or more stations to indicate that the one or more stations are allowed to perform access in the transmission opportunities shared by the second station. The one or more stations are stations scheduled by the second station. In this embodiment, an example in which the scheduled station is the first station is used. Certainly, a quantity of scheduled stations is not limited in this application.

The second station may be an AP, and the first station may be a STA associated with the AP. Certainly, both the first station and the second station may be STAs.

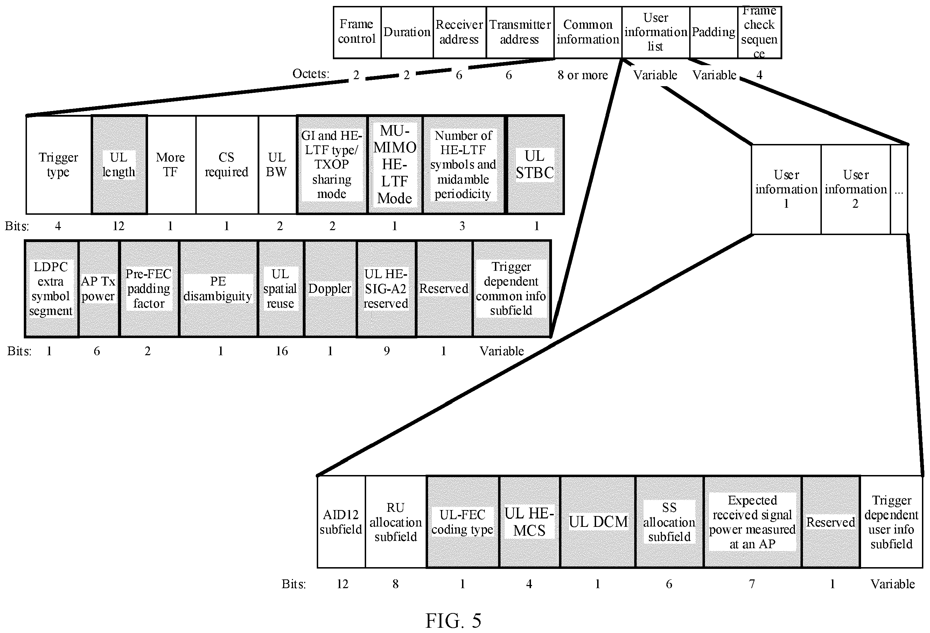

The first frame may be an MU-RTS TXS trigger frame. FIG. 5 is a schematic diagram of a format of a basic frame (basic frame) according to an embodiment of this application. When the basic frame is used as an MU-RTS TXS trigger frame, fields marked in gray in the basic frame are reserved. In addition, a GI and high-efficiency long training field (high-efficiency long training field, HE-LTF) type field is reused as a TXOP sharing mode (TXOP sharing mode) field in the MU-RTS TXS trigger frame.

The MU-RTS TXS trigger frame includes a frame header, a common information (common information) field, and a user information list (user information list) field, and may further include a padding (padding) field, a frame check sequence (frame check sequence, FCS) field, and the like. The frame header includes a frame control (frame control) field, a duration (Duration) field, a receiver address (receiving address, RA) field, and a transmitter address (transmission address, TA) field. Each of the common information field and the user information list field is classified into an HE variant and an EHT variant. FIG. 5 shows an HE variant common information field and an HE variant user information list field. The common information field includes common information that all STAs need to read. The user information list field includes one or more user information fields. Each user information field corresponds to information that needs to be read by one STA.

The first frame includes a first field, and the first field may be the TXOP sharing mode field in the common information field. When the first field is a first value, it indicates that the first station is allowed to perform access in the transmission opportunity.

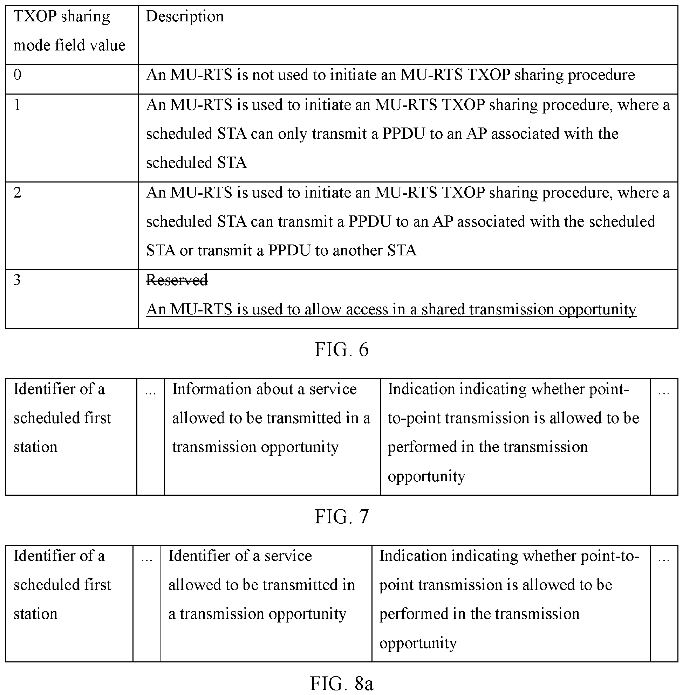

Specifically, FIG. 6 shows possible values of the TXOP sharing mode field. Currently, meaningful values of the TXOP sharing mode field are 0, 1, and 2, and the TXOP sharing mode field is reserved when a value of the TXOP sharing mode field is 3. When a value of the field is 0, it indicates that an MU-RTS is not used to initiate an MU-RTS TXOP sharing procedure (MU-RTS that does not initiate MU-RTS TXOP sharing procedure). When a value of the field is 1, it indicates that an MU-RTS is used to initiate an MU-RTS TXOP sharing procedure, where a scheduled STA can only transmit a PPDU to an AP associated with the scheduled STA (MU-RTS that initiates MU-RTS TXOP sharing procedure wherein a scheduled STA can only transmit PPDU(s) addressed to its associated AP). When a value of the field is 2, it indicates that an MU-RTS is used to initiate an MU-RTS TXOP sharing procedure, where a scheduled STA can transmit a PPDU to an AP associated with the scheduled STA or send a PPDU to another STA (MU-RTS that initiates MU-RTS TXOP sharing procedure wherein a scheduled STA can transmit PPDU(s) addressed to its associated AP or addressed to another STA). In this embodiment, a value 3 of the field is not reserved, and it indicates that the MU-RTS is used to allow access in the shared transmission opportunity. For example, the first value may be 3. In other words, when the value of the TXOP sharing mode field is 3, the trigger frame is the first frame in this embodiment. For accuracy, herein, meanings of the TXOP sharing mode field in FIG. 6 obtained when values of the TXOP sharing mode field are 0, 1, and 2 refer to the original text in the IEEE 802.11be standard, and modified positions in this embodiment are identified by a strikethrough and an underscore.

To accurately schedule a station or a service, the first frame further includes a second field.

In an implementation, the second field indicates a scheduled station. The second field includes an identifier of the scheduled first station. This implementation fully reuses a format of the user information field of the MU-RTS TXS trigger frame shown in FIG. 5, and does not need to be modified additionally. Specifically, the second field is an association identifier 12 (association identification 12, AID12) field, and indicates the identifier of the first station. After receiving the first frame, the first station obtains the second field through parsing. If an association identifier in the second field corresponds to the identifier of the first station, the first station may determine that the first station is scheduled by the second station.

Currently, strict requirements are imposed on delay characteristics of some services, for example, online games, virtual reality, and industrial sites. These specific services may be allowed to be preferentially transmitted in the transmission opportunity. Therefore, in another implementation, the second field indicates a service of the scheduled first station. As shown in FIG. 7, the second field includes at least one of the following: an identifier of the scheduled first station, and information about a service allowed to be transmitted in the transmission opportunity. Any reserved field in the user information field shown in FIG. 5 may be used to carry the information about the service allowed to be transmitted in the transmission opportunity. After receiving the first frame, the first station obtains the second field through parsing. If an association identifier in the second field corresponds to the identifier of the first station, the first station may determine that the first station is scheduled by the second station. Further, the first station obtains through parsing the information that is included in the second field and that is about the service allowed to be transmitted in the transmission opportunity. If information about the service transmitted by the first station corresponds to the information that is included in the second field and that is about the service allowed to be transmitted in the transmission opportunity, the first station may determine that the service can be accessed in the transmission opportunity shared by the second station. In addition, the second field may further include an indication indicating whether point-to-point transmission (P2P enable) is allowed in the transmission opportunity, in other words, whether the first station is allowed to perform point-to-point transmission with the another station associated with the second station in the transmission opportunity. The any reserved field in the user information field shown in FIG. 5 may be used to carry the indication indicating whether the first station is allowed to perform point-to-point transmission with the another station associated with the second station in the transmission opportunity.

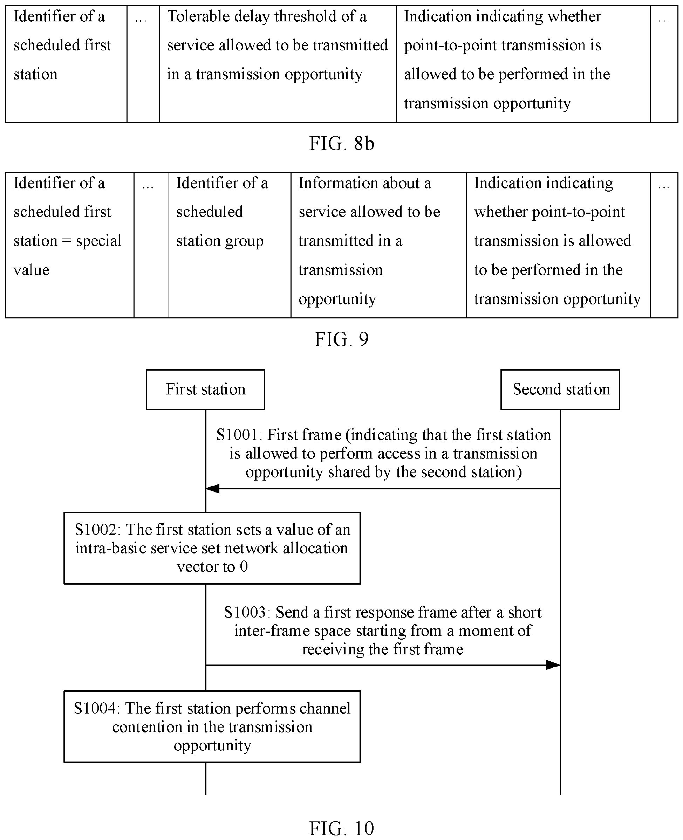

Specifically, the information about the service allowed to be transmitted in the transmission opportunity includes at least one of the following: an identifier (traffic identifier) of the service allowed to be transmitted in the transmission opportunity, and a tolerable delay (tolerable delay) threshold of the service allowed to be transmitted in the transmission opportunity. Therefore, field formats in FIG. 7 may be specifically shown in FIG. 8a or FIG. 8b separately.

In FIG. 8a, the second field includes at least one of the following: the identifier of the scheduled first station, the identifier of the service allowed to be transmitted in the transmission opportunity, and the indication indicating whether point-to-point transmission is allowed to be performed in the transmission opportunity. For example, each of the first station and the second station may pre-store a correspondence between an identifier of a service and a service. It is assumed that each of the first station and the second station pre-stores correspondences between identifiers of eight services and the services, and three bits may be used to represent an identifier of a service allowed to be transmitted in the transmission opportunity. For example, the identifier of the service allowed to be transmitted in the transmission opportunity may alternatively be a bitmap (bitmap). It is assumed that there are eight services that may be transmitted between the first station and the second station, and the bitmap includes eight bits. When a bit is set to "1", it indicates that a service corresponding to the bit is allowed to perform access in the transmission opportunity. When a bit is set to "0", it indicates that a service corresponding to the bit is disallowed to perform access in the transmission opportunity. For example, when the bitmap is "10010000", it indicates that a first service and a fourth service are allowed to perform access in the transmission opportunity.

In FIG. 8b, the second field includes at least one of the following: the identifier of the scheduled first station, the tolerable delay threshold of the service allowed to be transmitted in the transmission opportunity, and the indication indicating whether point-to-point transmission is allowed to be performed in the transmission opportunity. The tolerable delay threshold of the service allowed to be transmitted in the transmission opportunity is a maximum value of a tolerable delay of the service allowed to be transmitted in the transmission opportunity, in other words, a tolerable delay of the service of the first station is less than or equal to the tolerable delay threshold. To be specific, if the service has a high requirement for a delay characteristic, the service is allowed to perform access in the transmission opportunity. After receiving the first frame, the first station obtains through parsing the tolerable delay threshold that is in the second field and that is of the service allowed to be transmitted in the transmission opportunity, and determines tolerable delay of specific services in services that are being performed by the first station is less than or equal to the tolerable delay threshold. Therefore, when data of the service is to be transmitted, channel contention may be performed in the transmission opportunity.

In still another implementation, a plurality of STAs may alternatively be scheduled at a time. Therefore, the second field indicates a scheduled station group. As shown in FIG. 9, the second field includes at least one of the following: an identifier of the scheduled station group, information about a service allowed to be transmitted in the transmission opportunity, and an indication indicating whether point-to-point transmission is allowed to be performed in the transmission opportunity. When the user information field includes the second field, the user information field further includes a special AID12. For example, AID12 = 2047 may be set. The second field is used for a scheduled STA belonging to a specific group. For the station group, the information about the service allowed to be transmitted in the transmission opportunity and the indication indicating whether point-to-point transmission is allowed to be performed in the transmission opportunity are for each STA in the station group. The information about the service allowed to be transmitted in the transmission opportunity includes at least one of the following: an identifier of the service allowed to be transmitted in the transmission opportunity, and a tolerable delay threshold of the service allowed to be transmitted in the transmission opportunity. For details, refer to the foregoing implementation.

In still another implementation, a single STA may be scheduled by using second fields in a part of user information fields, or a station group may be scheduled by using second fields in the other part of user information fields.

S402: The first station sends a first response frame in response to the first frame.

Correspondingly, the second station receives the first response frame sent by the first station.

After receiving the first frame, the first station learns that the first frame indicates that the first station is allowed to perform access in the transmission opportunity shared by the second station, and sends the first response frame to the second station. The first response frame may indicate that the first frame is received.

S403: The first station performs channel contention in the transmission opportunity.

The first station performs channel contention in the transmission opportunity shared by the second station. The second station may share the transmission opportunity with the first station and more stations, and the first station may perform channel contention in a random access mode such as EDCA.

According to the data transmission method provided in this embodiment of this application, after obtaining the channel through contention, the second station may indicate that the first station is allowed to perform access in the transmission opportunity shared by the second station. The first station may perform channel contention in the transmission opportunity shared by the second station, and perform channel contention in the transmission opportunity after sending the first response frame. This improves efficiency and reliability of channel contention.

In addition, the foregoing method supports access in the shared transmission opportunity on the basis of an existing MU-RTS TXS trigger frame, and has good backward compatibility.

FIG. 10 is a schematic flowchart of another data transmission method according to an embodiment of this application. The method may include the following steps.

S1001: A second station sends a first frame, where the first frame indicates that a first station is allowed to perform access in a transmission opportunity shared by the second station.

Correspondingly, the first station receives the first frame sent by the second station.

For a specific implementation of this step, refer to step S401 in the foregoing embodiment.

S1002: The first station sets a value of an intra-basic service set network allocation vector (intra-BSS NAV) to 0.

When receiving the first frame, the first station sets the value of the intra-BSS NAV to 0, so that the first station can perform channel contention.

Specifically, in a case, if the value of the intra-BSS NAV is not 0, the first station sets the intra-BSS NAV to 0, so that the first station performs channel contention by using the transmission opportunity.

In another case, the value of the intra-BSS NAV is 0. In this case, the first station may not need to perform an operation of setting the value of the intra-BSS NAV to 0.

S1003: The first station sends a first response frame after a short inter-frame space (short inter-frame space, SIFS) starting from a moment of receiving the first frame.

Correspondingly, the second station receives the first response frame sent by the first station.

The first station sets the value of the intra-BSS NAV to 0 when receiving the first frame, and the first station sends the first response frame after the SIFS starting from the moment of receiving the first frame. The first response frame is a response to the first frame, and may indicate that the first frame is received. For example, the first response frame may be a clear to send (clear to send, CTS) frame. The CTS frame is a non-HT frame, and can be parsed by a STAof any version. This facilitates access of a scheduled station or service in this embodiment in the shared transmission opportunity.

Further, when it is detected that a channel is idle, and a value of a basic network allocation vector (basic NAV) is 0, the first station sends the first response frame after the SIFS starting from the moment of receiving the first frame.

The first station may detect, through physical carrier sense, whether the channel is idle.

The basic NAV is a counter updated based on a received PPDU (namely, an Inter-BSS PPDU) from a neighboring cell. That the value of the basic NAV is 0 indicates that currently no station of the neighboring cell is using the channel, and the first station does not need to delay channel access to avoid transmission of the station of the neighboring cell.

It may be understood that, when the first station receives the first frame and sets the value of the intra-BSS NAV of the first station to 0, if it is detected that the channel is busy, or the value of the basic NAV is not 0, the first station may skip performing step S1003. However, because the first station has set the value of the intra-BSS NAV of the first station to 0, the first station may still perform step S1004, in other words, may perform channel contention.

S1004: The first station performs channel contention in the transmission opportunity.

For a specific implementation of this step, refer to step S403 in the foregoing embodiment.

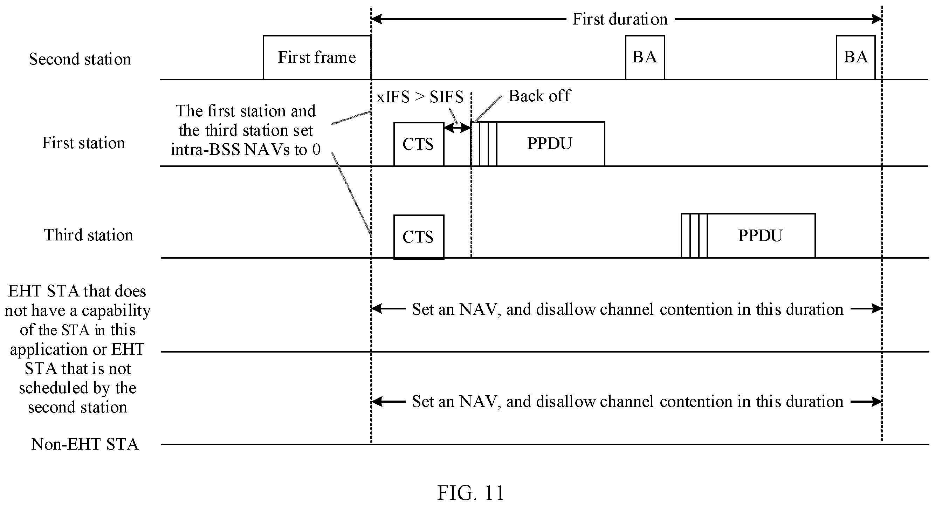

FIG. 11 is an example of data transmission based on the method shown in FIG. 10. As shown in FIG. 11, the second station is an AP, and the AP allows access of the first station and a third station that are associated with the AP in the transmission opportunity shared by the AP. The first station and the third station may be stations that have requirements for a delay characteristic and the like. In addition, the first station and the third station may be EHT STAs. The AP sends first frames. When receiving the first frames, the first station and the third station set values of intra-BSS NAVs to 0, and send CTS frames after an SIFS starting from a moment of receiving the first frames. Then, the first station and the third station perform channel contention in a random access mode such as EDCA. In FIG. 11, the first station first obtains a channel through contention, and the first station may send a PPDU to the AP after an xIFS (where the xIFS > the SIFS) starting from a moment of replying with a CTS frame, or may perform P2P transmission with another STA. In FIG. 11, after obtaining the channel through contention, the first station sends the PPDU to the AP, and releases the channel after receiving a block acknowledgement (block acknowledgement, BA) sent by the AP. The third station may send a PPDU to the AP through the channel, or may perform P2P transmission with another STA. However, in this example, an EHT STA that does not have a capability of this application, an EHT STA that is not scheduled by the AP, or a non-EHT STA (non-EHT STA) needs to set its own NAV, and is disallowed to contend for the channel in first duration. The first duration is indicated by a duration field in a frame header of the first frame. The first duration indicates duration for triggering the scheduled station to perform channel access.

Further, when receiving the first frame, the first station may start a first timer, where an initial value of the first timer is the first duration. The first station may perform channel contention when a value of the first timer is not equal to 0 (in other words, the first timer does not expire), and stop transmission when the value of the first timer is 0 (in other words, the first timer expires). An objective of stopping transmission is as follows: After the first duration ends, the first station and another station that cannot participate in the shared transmission opportunity perform channel contention together, to ensure channel access fairness between the first station and the another station.

According to the data transmission method provided in this embodiment of this application, after obtaining the channel through contention, the second station may indicate that the first station is allowed to perform access in the transmission opportunity shared by the second station. The first station may set the value of the intra-BSS NAV of the first station to 0, to perform channel contention in the transmission opportunity shared by the second station, and perform channel contention in the transmission opportunity after sending the first response frame. This improves efficiency and reliability of channel contention.

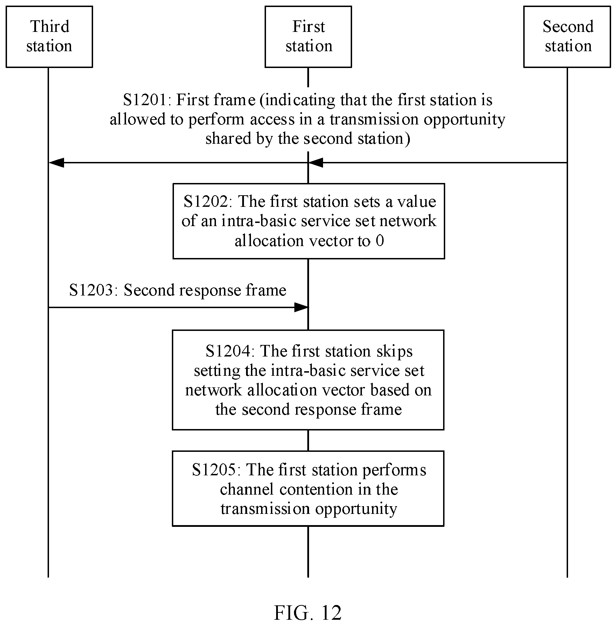

FIG. 12 is a schematic flowchart of still another data transmission method according to an embodiment of this application. The method may include the following steps.

S1201: A second station sends a first frame, where the first frame indicates that a first station is allowed to perform access in a transmission opportunity shared by the second station.

Correspondingly, the first station receives the first frame sent by the second station.

For a specific implementation of this step, refer to step S401 in the foregoing embodiment.

In this embodiment, it is assumed that the second station schedules the first station and a third station to perform access in the transmission opportunity shared by the second station.

S1202: The first station sets a value of an intra-BSS NAV to 0.

When receiving the first frame, the first station sets the value of the intra-BSS NAV to 0, so that the first station can perform channel contention.

S1203: The third station sends a second response frame.

Correspondingly, the first station receives the second response frame sent by the third station.

Because the second station further schedules the third station to perform access in the transmission opportunity shared by the second station, the third station sends the second response frame after an SIFS starting from a moment of receiving a first frame. The second response frame may be a CTS frame.

Specifically, the third station broadcasts the second response frame, and the first station receives the second response frame sent by the third station.

S1204: The first station skips setting the intra-BSS NAV based on the second response frame.

The first station scheduled by using the first frame may have correctly parsed the first frame, but cannot reply with a first response frame because the first station detects that a channel is busy, or a value of a basic NAV is not 0. However, the first station may receive a CTS frame sent by another station.

In the conventional technology, when a first station receives a CTS frame sent by another station, the CTS frame includes an intra-BSS NAV, and the first station needs to set an intra-BSS NAV of the first station based on the CTS frame. However, if so set, the first station cannot participate in channel contention in the transmission opportunity. Therefore, in this embodiment, the first station skips setting the intra-BSS NAV based on the second response frame, in other words, the value of the intra-BSS NAV is still 0.

S1205: The first station performs channel contention in the transmission opportunity.

When it is detected that the channel is idle, and the value of the basic NAV is 0, the first station may perform channel contention in the transmission opportunity. For a specific implementation of this step, refer to step S403 or S1004 in the foregoing embodiment.

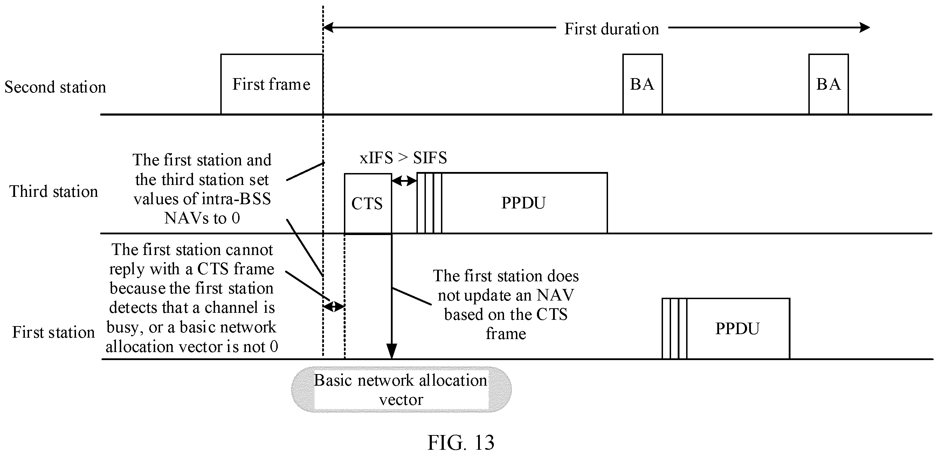

FIG. 13 is an example of data transmission based on the method shown in FIG. 12. In FIG. 13, the second station schedules the first station and the third station to perform access in the transmission opportunity shared by the second station, and sends the first frames to the first station and the third station. When receiving the first frames, the first station and the third station set values of intra-BSS NAVs to 0. If the third station detects that the channel is idle, and a value of a basic NAV is 0, the third station sends CTS after the SIFS starting from the moment of receiving the first frame. However, when performing carrier sense after receiving the first frame, the first station detects that the channel is busy, or the basic NAV is set (in other words, the value of the basic NAV is not 0), and according to a protocol specification, the first station is disallowed to reply with a CTS frame to the second station. Next, the first station receives the CTS frame returned by the third station. In this example, the first station may not update the intra-BSS NAV (in other words, the value of intra-BSS NAV is still 0) based on the CTS broadcast by the third station. Therefore, the first station may perform channel contention when it is detected that the channel is idle, and the value of the basic NAV is 0.

Further, when receiving the first frame, the first station may start a first timer, where an initial value of the first timer is first duration. The first station may perform channel contention when a value of the first timer is not equal to 0 (in other words, the first timer does not expire), and stop transmission when the value of the first timer is 0 (in other words, the first timer expires). An objective of stopping transmission is as follows: After the first duration ends, the first station and another station that cannot participate in the shared transmission opportunity perform channel contention together, to ensure channel access fairness between the first station and the another station.

According to the data transmission method provided in this embodiment of this application, after obtaining the channel through contention, the second station may indicate that the first station is allowed to perform access in the transmission opportunity shared by the second station. When receiving the first frame, the first station sets the value of the intra-BSS NAV to 0 if the channel is busy, or the value of the basic NAV is not 0, and the first station still enables the value of the intra-BSS NAV to be 0 when receiving a response frame returned by another station scheduled by the second station. Therefore, the first station may perform channel contention when it is detected that the channel is idle, and the value of the basic NAV is 0. This improves efficiency and reliability of channel contention.

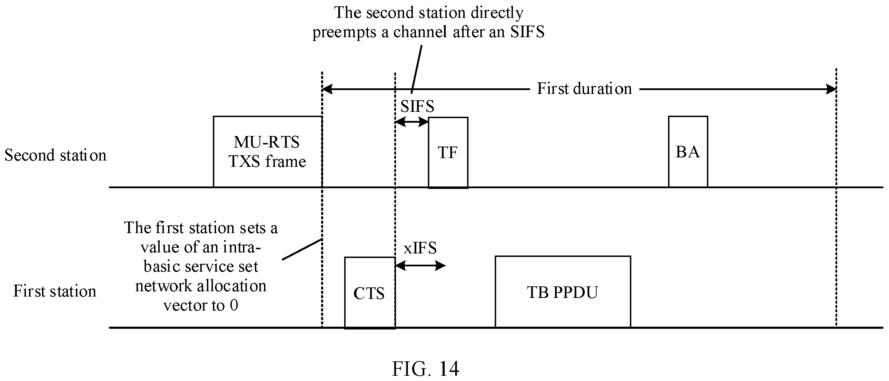

In another embodiment, as shown in FIG. 14, if the second station (herein, an AP) still needs to send data in the first duration, the second station may start to send the data after the SIFS starting from the moment at which the first station replies with a CTS frame. Because the first station needs to wait for a DIFS or an AIFS starting from the moment of sending the CTS frame before starting backoff, where the DIFS > the SIFS and the AIFS > the SIFS, the AP has a priority of preempting the channel. After the AP completes using the channel, the first station may contend for the channel according to a conventional IEEE 802.11 channel contention mechanism.

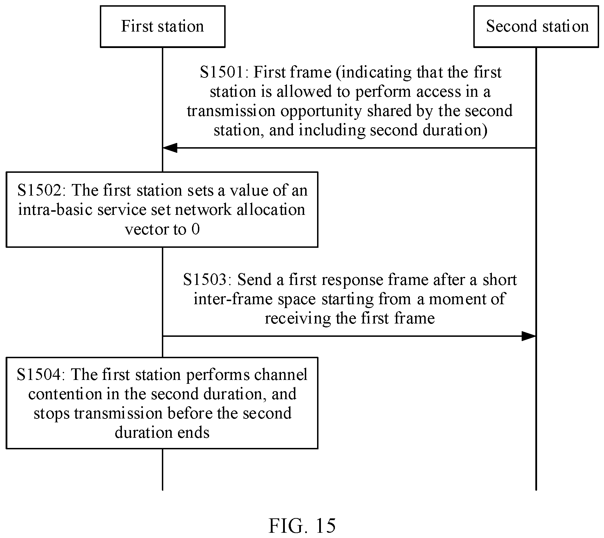

FIG. 15 is a schematic flowchart of yet another data transmission method according to an embodiment of this application. The method may include the following steps.

S1501: A second station sends a first frame, where the first frame indicates that a first station is allowed to perform access in a transmission opportunity shared by the second station.

Correspondingly, the first station receives the first frame sent by the second station.

For a specific implementation of this step, refer to step S401 in the foregoing embodiment. A difference lies in that the first frame further includes second duration. The second duration indicates that the first station is allowed to perform channel contention in the second duration, and stop transmission before the second duration ends. The second duration may also be referred to as allocation time (allocated time).

In an implementation, a duration field of the first frame may indicate the second duration. In this case, the duration field may be reused to indicate the first duration and the second duration. In another implementation, the first frame further includes a third field, and the third field indicates the second duration. The third field may be any reserved field in an MU-RTS TXS trigger frame.

S1502: The first station sets a value of an intra-BSS NAV to 0.

For a specific implementation of this step, refer to step S1002 in the foregoing embodiment.

S1503: The first station sends a first response frame after a short inter-frame space starting from a moment of receiving the first frame.

Correspondingly, the second station receives the first response frame sent by the first station.

For a specific implementation of this step, refer to step S1003 in the foregoing embodiment.

S1504: The first station performs channel contention in the second duration, and stops transmission before the second duration ends.

A start time of the second duration may be that when the first station receives the first frame, the first station may perform channel contention after the SIFS starting from the moment of replying with the first response frame. The first station performs channel contention in the second duration, and stops transmission before the second duration ends. Stopping transmission includes stopping sending a PPDU to an AP or another station, and stopping receiving a BA sent by the AP or the another station. The first station is disallowed to perform channel contention after the second duration.

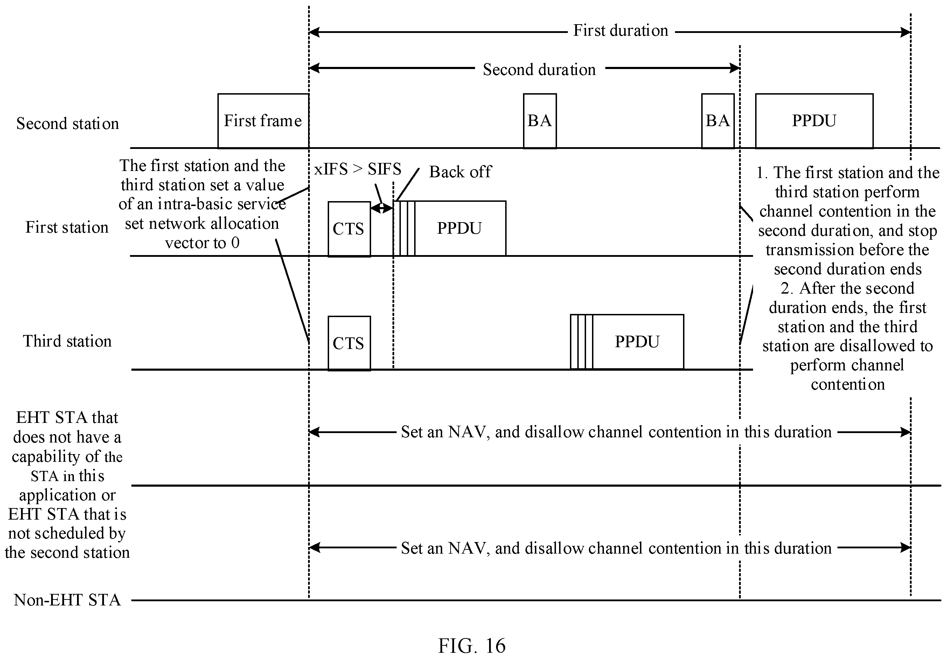

FIG. 16 is an example of data transmission based on the method shown in FIG. 15. As shown in FIG. 16, the second station is an AP, and the AP allows access of the first station and a third station that are associated with the AP in the transmission opportunity shared by the AP. The first station and the third station may be stations that have requirements for a delay characteristic and the like. In addition, the first station and the third station may be EHT STAs. The AP sends the first frame, where the duration field in the first frame indicates the first duration and the second duration, or the duration field in the first frame indicates the first duration and the third field in the first frame indicates the second duration, where the second duration ≤ the first duration. When receiving first frames, the first station and the third station set values of intra-BSS NAVs to 0, and send CTS frames after the SIFS starting from the moment of receiving the first frames. Then, in the second duration, the first station and the third station perform channel contention in a random access mode such as EDCA. In FIG. 16, the first station first obtains a channel through contention, and the first station may send a PPDU to the AP after an xIFS (where the xIFS > the SIFS) starting from a moment of replying with a CTS frame, or may perform P2P transmission with another STA. In FIG. 16, after obtaining the channel through contention, the first station sends the PPDU to the AP, and releases the channel after receiving a BA sent by the AP. The third station may send a PPDU to the AP through the channel, or may perform P2P transmission with another STA. In addition, the first station and the third station perform channel contention in the second duration, and stop transmission before the second duration ends. After the second duration ends, the first station and the third station are disallowed to perform channel contention. However, in this example, an EHT STA that does not have a capability of this application, an EHT STA that is not scheduled by the AP, or a non-EHT STA (non-EHT STA) needs to set its own NAV, and is disallowed to contend for the channel in the first duration.

According to the data transmission method provided in this embodiment of this application, after obtaining the channel through contention, the second station may indicate that the first station is allowed to perform access in the transmission opportunity shared by the second station. The first station may set the value of the intra-BSS NAV of the first station to 0, to perform channel contention in the transmission opportunity shared by the second station, and perform channel contention in the transmission opportunity after sending the first response frame. The first station performs channel contention in the second duration, and stops transmission before the second duration ends. After the second duration ends, the first station and the third station are disallowed to perform channel contention, to restore a right of use of the channel to the first station with a priority. This improves efficiency and reliability of channel contention.

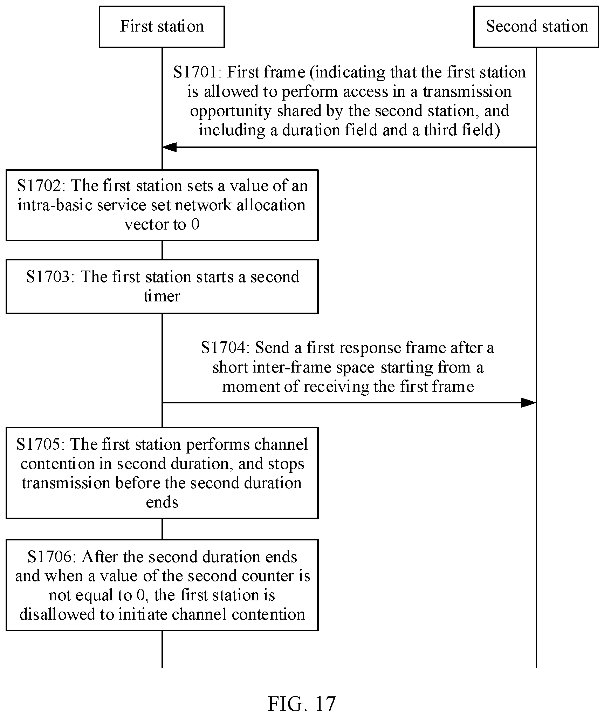

FIG. 17 is a schematic flowchart of still yet another data transmission method according to an embodiment of this application. The method may include the following steps.

S1701: A second station sends a first frame, where the first frame indicates that a first station is allowed to perform access in a transmission opportunity shared by the second station.

Correspondingly, the first station receives the first frame sent by the second station.

For a specific implementation of this step, refer to step S1501 in the foregoing embodiment. In this embodiment, the first frame further includes a duration field and a third field. The duration field indicates first duration, and the third field indicates second duration. The third field may be any reserved field in an MU-RTS TXS trigger frame. The first duration is greater than or equal to the second duration.

S1702: The first station sets a value of an intra-BSS NAV to 0.

For a specific implementation of this step, refer to step S1002 in the foregoing embodiment.

S1703: The first station starts a second timer.

When receiving the first frame, the first station starts the second timer. An initial value of the second timer is equal to the first duration.

S1704: The first station sends a first response frame after a short inter-frame space starting from a moment of receiving the first frame.

Correspondingly, the second station receives the first response frame sent by the first station.

For a specific implementation of this step, refer to step S1003 in the foregoing embodiment.

S1705: The first station performs channel contention in the second duration, and stops transmission before the second duration ends.

For a specific implementation of this step, refer to step S1504 in the foregoing embodiment.

S1706: After the second duration ends and when a value of the second counter is not equal to 0, the first station is disallowed to initiate channel contention.

In this embodiment, after the second duration ends and when the value of the second counter is not equal to 0 (in other words, the second timer does not expire), the first station and a third station need to restore intra-BSS NAVs, in other words, channel contention is disallowed to be initiated.

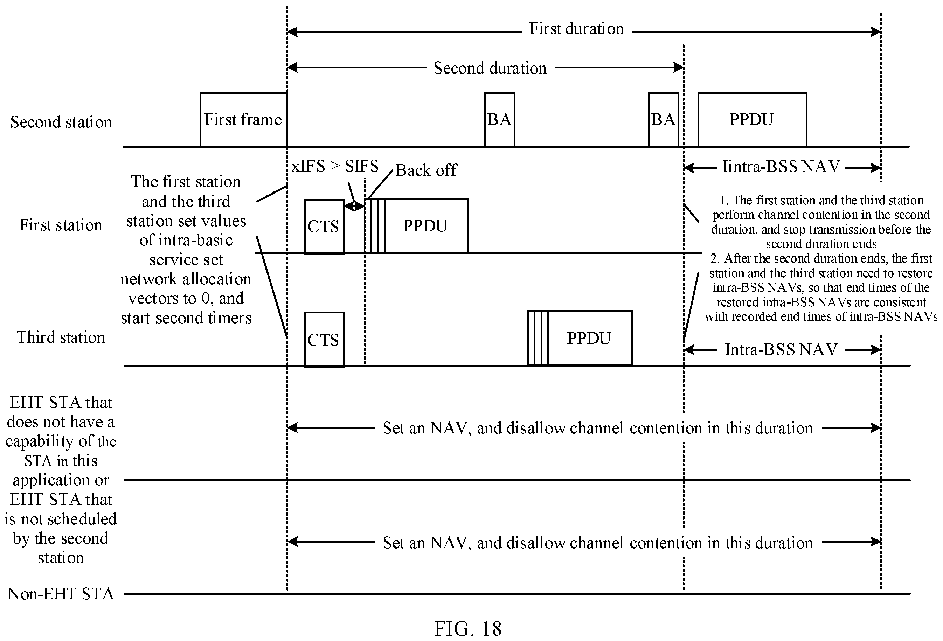

FIG. 18 is an example of data transmission based on the method shown in FIG. 17. A difference between FIG. 18 and FIG. 16 is that when receiving first frames, the first station and the second station set need to start second timers while setting values of the intra-BSS NAVs to 0, that is, end times of the intra-BSS NAVs are recorded. The initial value of the second timer is the first duration. After the second duration ends and when the value of the second counter is not equal to 0 (in other words, the second timer does not expire), the first station and the third station need to restore the intra-BSS NAVs, in other words, channel contention is disallowed to be initiated. End times of the restored intra-BSS NAVs are consistent with the end times of the recorded intra-BSS NAVs.

According to the data transmission method provided in this embodiment of this application, after obtaining a channel through contention, the second station may indicate that the first station is allowed to perform access in the transmission opportunity shared by the second station. The first station may set the value of the intra-BSS NAV of the first station to 0, to perform channel contention in the transmission opportunity shared by the second station, and perform channel contention in the transmission opportunity after sending the first response frame. The first station performs channel contention in the second duration, and stops transmission before the second duration ends. After the second duration ends, and when the value of the second counter is not equal to 0 (in other words, the second timer does not expire), the first station and the third station need to restore the intra-BSS NAVs, in other words, channel contention is disallowed to be initiated. This improves efficiency and reliability of channel contention.

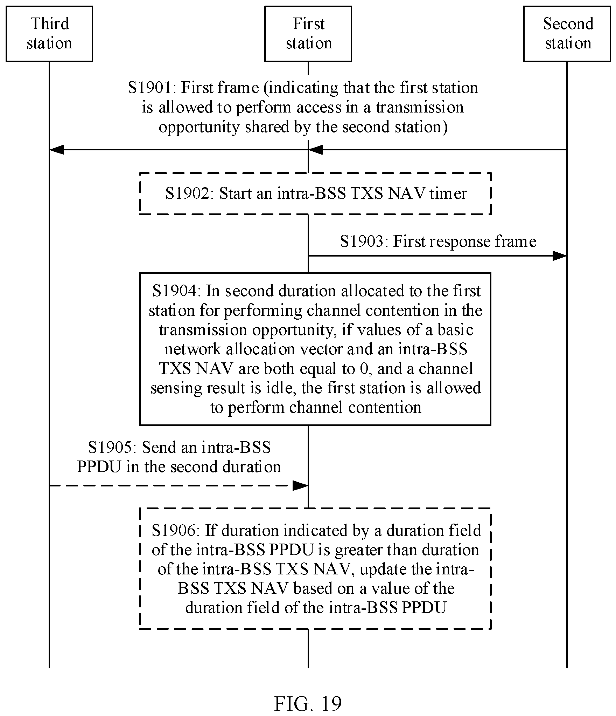

FIG. 19 is a schematic flowchart of a further data transmission method according to an embodiment of this application. The method may include the following steps.

S1901: A second station sends a first frame, where the first frame indicates that a first station is allowed to perform access in a transmission opportunity shared by the second station.

Correspondingly, the first station receives the first frame sent by the second station.

For a specific implementation of this step, refer to step S401 in the foregoing embodiment. A difference lies in that the first frame further includes second duration. The second duration indicates that the first station is allowed to perform channel contention in the second duration, and stop transmission before the second duration ends. The second duration may also be referred to as allocation time.

In an implementation, a duration field of the first frame may indicate the second duration. In this case, the duration field may be reused to indicate the first duration and the second duration. In another implementation, the first frame further includes a third field, and the third field indicates the second duration. The third field may be any reserved field in an MU-RTS TXS trigger frame.

In addition, different from the foregoing embodiment, the first station retains an intra-BSS NAV (in other words, a value of the intra-BSS NAV is not set to 0). However, in this embodiment, the first station can still perform access in the transmission opportunity shared by the second station when the first station is allowed to retain the intra-BSS NAV.

S1902: The first station starts an intra-BSS TXS NAV timer.

For example, when receiving the first frame, the first station starts the intra-BSS TXS NAV timer, where an initial value of the intra-BSS TXS NAV timer is 0. An intra-BSS TXS NAV is different from the intra-BSS NAV. A name of the intra-BSS TXS NAV is not limited in this application, and may be replaced with another name.

This step is optional and is represented by a dashed line in the figure.

S1903: The first station sends a first response frame after receiving the first frame.

Correspondingly, the second station receives the first response frame sent by the first station.

For a specific implementation of this step, refer to step S402 or S1003 in the foregoing embodiment.

S1904: In the second duration allocated to the first station for performing channel contention in the transmission opportunity, if values of a basic NAV and the intra-BSS TXS NAV are both equal to 0, and a channel sensing result is idle, allow the first station to perform channel contention.

In the second duration, random access of the first station may not be limited by the intra-BSS NAV of the first station, but needs to be limited by the intra-BSS TXS NAV and the basic NAV. Therefore, after the first station replies with the first response frame, if the values of the basic NAV and the intra-BSS TXS NAV are both equal to 0, and the channel sensing result is idle, the first station is allowed to perform channel contention. The intra-BSS TXS NAV takes effect in the second duration.

It is assumed that the first station first obtains a channel through contention. In this case, the first station sends a PPDU, and a third station receives the PPDU sent by the first station. Because both the first station and the third station are associated stations of the second station, the PPDU sent by the first station is identified as an intra-BSS PPDU, and an intra-BSS TXS NAV of the third station is updated based on the intra-BSS PPDU. The third station stops contention before a value of the intra-BSS TXS NAV of the third station is not 0.

S1905: The third station sends an intra-BSS PPDU in the second duration.

Correspondingly, the first station receives the intra-BSS PPDU sent by the third station.

After completing transmission, the first station releases the channel. The third station sends a PPDU after obtaining the channel through contention, and the first station receives the PPDU sent by the third station. Because both the first station and the third station are associated stations of the second station, the PPDU sent by the third station is identified as an intra-BSS PPDU, and the intra-BSS TXS NAV is updated based on the intra-BSS PPDU according to the method in S1906.

S1906: If duration indicated by a duration field of the intra-BSS PPDU is greater than duration of the intra-BSS TXS NAV, update the intra-BSS TXS NAV based on a value of the duration field of the intra-BSS PPDU.

The intra-BSS PPDU sent by the third station includes a duration field. If duration indicated by the duration field of the intra-BSS PPDU is greater than duration of the intra-BSS TXS NAV, the intra-BSS TXS NAV is updated based on a value of the duration field of the intra-BSS PPDU, to ensure data transmission of the third station. If an end time indicated by the duration field of the intra-BSS PPDU is earlier than or equal to an end time of the intra-BSS TXS NAV of the first station, the first station does not update the intra-BSS TXS NAV of the first station.

In addition, if the end time indicated by the duration field of the intra-BSS PPDU is later than the end time of the intra-BSS NAV of the first station, the first station updates the intra-BSS NAV of the first station based on the value of the duration field of the intra-BSS PPDU. If the end time indicated by the duration field of the intra-BSS PPDU is earlier than or equal to the end time of the intra-BSS NAV of the first station, the first station does not update the intra-BSS NAV of the first station.

Alternatively, if the end time indicated by the duration field of the intra-BSS PPDU is earlier than or equal to the end time of the intra-BSS NAV of the first station, it is further determined that if the end time indicated by the duration field of the intra-BSS PPDU is later than the end time corresponding to the intra-BSS TXS NAV of the first station, the intra-BSS TXS NAV is updated based on the value of the duration field of the intra-BSS PPDU. Otherwise, if the end time indicated by the duration field of the intra-BSS PPDU is earlier than or equal to the end time corresponding to the intra-BSS TXS NAV of the first station, the intra-BSS TXS NAV is not updated.

Alternatively, if the end time indicated by the duration field of the intra-BSS PPDU is later than the end time of the intra-BSS NAV of the first station, the intra-BSS NAV of the first station needs to be updated based on the value of the duration field of the received intra-BSS PPDU. In addition, the intra-BSS TXS NAV of the first station fails this time, so that random access of a scheduled STAis limited by an intra-BSS NAV and a basic NAV of the scheduled STA.

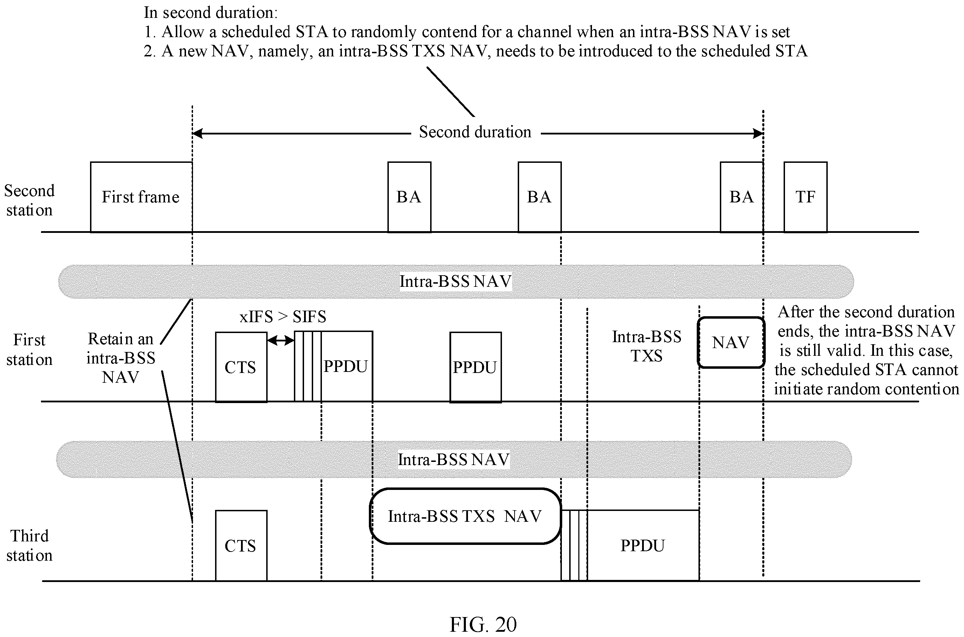

FIG. 20 is an example of data transmission based on the method shown in FIG. 19. As shown in FIG. 20, the second station schedules the first station and the third station to perform access in the transmission opportunity shared by the second station. When receiving first frames, the first station and the third station respectively retain intra-BSS NAVs of the first station and the third station. In this example, the scheduled first station and the scheduled third station are allowed to perform channel contention when the intra-BSS NAVs are set. Specifically, a new NAV, namely, the intra-BSS TXS NAV, is set for each of the scheduled first station and the scheduled third station. In this example, the first station and the third station reply with CTS frames after an SIFS starting from a moment of receiving the first frames, and start intra-BSS TXS NAV timers. An initial value of the intra-BSS TXS NAV timer is 0. However, the first station first obtains the channel through contention, and the first station sends a PPDU to the AP. The PPDU is identified by the third station as an intra-BSS PPDU. Duration indicated by a duration field of the intra-BSS PPDU is greater than the duration of the intra-BSS TXS NAV. In this case, the third station updates the intra-BSS TXS NAV of the third station based on a value of the duration field of the intra-BSS PPDU, to ensure data transmission of the first station. After completing transmission, the first station releases the channel. The third station obtains the channel through contention. Similarly, the first station sets the intra-BSS TXS NAV based on the intra-BSS PPDU sent by the third station. In addition, after the second duration ends, the intra-BSS NAVs are still valid. In this case, the first station and the third station cannot initiate random contention.

According to the data transmission method provided in this embodiment of this application, after obtaining the channel through contention, the second station may indicate that the first station is allowed to perform access in the transmission opportunity shared by the second station, the first station retains the intra-BSS NAV of the first station, and sets the intra-BSS TXS NAV when another scheduled station performs data transmission, to avoid a channel conflict. This improves efficiency and reliability of channel contention.

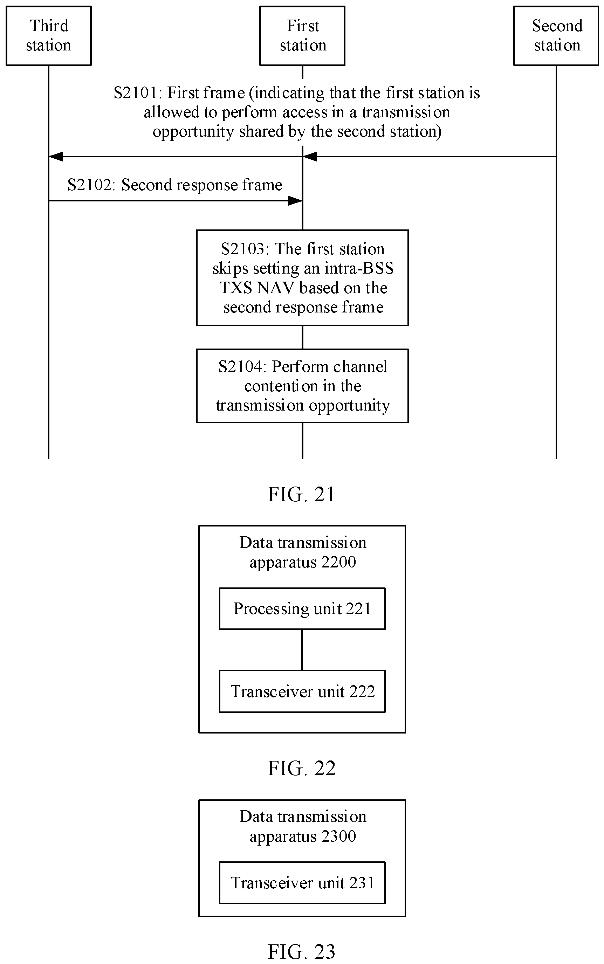

FIG. 21 is a schematic flowchart of a still further data transmission method according to an embodiment of this application. The method may include the following steps.

S2101: A second station sends a first frame, where the first frame indicates that a first station is allowed to perform access in a transmission opportunity shared by the second station.

Correspondingly, the first station receives the first frame sent by the second station.

For a specific implementation of this step, refer to step S1201 in the foregoing embodiment. A difference lies in that the first frame further includes second duration. The second duration indicates that the first station is allowed to perform channel contention in the second duration, and stop transmission before the second duration ends. The second duration may also be referred to as allocation time.

In an implementation, a duration field of the first frame may indicate the second duration. In this case, the duration field may be reused to indicate the first duration and the second duration. In another implementation, the first frame further includes a third field, and the third field indicates the second duration. The third field may be any reserved field in an MU-RTS TXS trigger frame.

S2102: A third station sends a second response frame.

Correspondingly, the first station receives the second response frame sent by the third station.

For a specific implementation of this step, refer to step S1203 in the foregoing embodiment.

S2103: The first station skips setting an intra-BSS TXS NAV based on the second response frame.

In the second duration, random access of the first station may not be limited by an intra-BSS NAV of the first station, but needs to be limited by the intra-BSS TXS NAV and a basic NAV.

In the conventional technology, when a first station receives a CTS frame sent by another station, the CTS frame is an intra-BSS PPDU, and the first station needs to set an intra-BSS TXS NAV of the first station based on the CTS frame. However, if so set, the first station cannot participate in channel contention in the transmission opportunity. Therefore, in this embodiment, the first station does not update the intra-BSS TXS NAV based on the second response frame.

S2104: When it is detected that a channel is idle, and values of the basic NAV and the intra-BSS TXS NAV are 0, the first station performs channel contention in the transmission opportunity.

For a specific implementation of this step, refer to step S1205 in the foregoing embodiment.

According to the data transmission method provided in this embodiment of this application, after obtaining the channel through contention, the second station may indicate that the first station is allowed to perform access in the transmission opportunity shared by the second station. The first station receives a response frame returned by another station scheduled by the second station, and skips setting the intra-BSS TXS NAV based on the response frame. Therefore, the first station may perform channel contention after it is detected that the channel is idle, and a value of the basic NAV is 0. This improves efficiency and reliability of channel contention.

The foregoing describes the solutions provided in embodiments of this application. It may be understood that, to implement the foregoing functions, a data transmission apparatus (for example, which may be the first station or the second station) includes a corresponding hardware structure and/or software module for performing each function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the data transmission apparatus may be divided into functional modules based on the foregoing method examples. For example, functional modules may be obtained through division based on corresponding functions, or at least two functions may be integrated into one processing module. The functional module may be implemented in a form of hardware, or may be implemented in a form of a software functional module. It should be noted that, in embodiments of this application, division into modules is an example, and is merely logical function division. In actual implementation, another division manner may be used. The following uses an example in which functional modules are obtained through division based on corresponding functions for description.

The data transmission apparatus may be the foregoing first station. A schematic diagram of a possible structure of the data transmission apparatus is shown in FIG. 22. A data transmission apparatus 2200 includes a processing unit 221 and a transceiver unit 222.

The transceiver unit 222 is configured to receive a first frame sent by a second station, where the first frame indicates that the data transmission apparatus is allowed to perform access in a transmission opportunity shared by the second station. The transceiver unit 222 is further configured to send a first response frame in response to the first frame. The processing unit 221 is configured to perform channel contention in the transmission opportunity.

Optionally, the first frame is a multi-user request to send transmission opportunity sharing MU-RTS TXS trigger frame. The first frame includes a first field. When the first field is a first value, it indicates that the data transmission apparatus is allowed to perform access in the transmission opportunity.

Optionally, the first field is a transmission opportunity sharing mode field.

Optionally, the first frame further includes a second field. The second field includes at least one of the following: an identifier of the scheduled data transmission apparatus, an identifier of a scheduled station group, information about a service allowed to be transmitted in the transmission opportunity, and an indication indicating whether point-to-point transmission is allowed to be performed in the transmission opportunity.

Optionally, the information about the service allowed to be transmitted in the transmission opportunity includes at least one of the following: an identifier of the service allowed to be transmitted in the transmission opportunity, and a tolerable delay threshold of the service allowed to be transmitted in the transmission opportunity.

Optionally, the processing unit 221 is further configured to set a value of an intra-basic service set network allocation vector intra-BSS NAV to 0.

Optionally, the transceiver unit 222 is further configured to send the first response frame after a short inter-frame space starting from a moment of receiving the first frame.

Optionally, the transceiver unit 222 is further configured to receive a second response frame sent by a third station, and the processing unit 221 is further configured to skip setting the intra-BSS NAV based on the second response frame. The processing unit 221 is further configured to: when it is detected that a channel is idle, and a value of a basic NAV is 0, perform channel contention in the transmission opportunity.

Optionally, the processing unit 221 is further configured to start a first timer, where an initial value of the first timer is first duration indicated by a duration (Duration) field of the first frame. The processing unit 221 is further configured to: perform channel contention when a value of the first timer is not equal to 0, and stop transmission when the value of the first timer is 0.

Optionally, the processing unit 221 is further configured to: perform channel contention in second duration, and stop transmission before the second duration ends. A duration (Duration) field of the first frame further indicates the second duration; or the first frame further includes a third field, and the third field indicates the second duration.

Optionally, the first frame further includes the third field and the duration (Duration) field. The third field indicates the second duration allocated to the data transmission apparatus for performing channel contention in the transmission opportunity, and the duration field indicates first duration. The first duration is duration corresponding to the transmission opportunity shared by the second station, and the first duration is greater than or equal to the second duration. The processing unit 221 is further configured to: start a second timer, where an initial value of the second timer is equal to the first duration; and set the intra-BSS NAV to 0. The processing unit 221 is further configured to disallow to initiate channel contention after the second duration ends and when a value of the second counter is not equal to 0.

Optionally, the processing unit 221 is further configured to: in second duration allocated to the data transmission apparatus for performing channel contention in the transmission opportunity, if values of a basic NAV and an intra-BSS TXS NAV are both equal to 0, and a channel sensing result is idle, allow the data transmission apparatus to perform channel contention, where the intra-BSS TXS NAV is different from an intra-BSS NAV. A duration field further indicates the second duration; or the first frame further includes a third field, and the third field indicates the second duration.

Optionally, the processing unit 221 is further configured to: after the transceiver unit receives the first frame, start an intra-BSS TXS NAV timer, where the intra-BSS TXS NAV timer is initialized to 0. The processing unit 221 is further configured to: if the data transmission apparatus receives an intra-BSS PPDU in the second duration, and duration indicated by a duration field of the intra-BSS PPDU is greater than duration of the intra-BSS TXS NAV, update the intra-BSS TXS NAV based on a value of the duration field of the intra-BSS PPDU.

Optionally, the transceiver unit 222 is further configured to receive a second response frame sent by a third station, and the processing unit 221 is further configured to skip setting the intra-BSS TXS NAV based on the second response frame. The processing unit 221 is further configured to: when it is detected that a channel is idle, and the values of the basic NAV and the intra-BSS TXS NAV are both 0, perform channel contention in the transmission opportunity.

The data transmission apparatus may be the foregoing second station. A schematic diagram of a possible structure of the data transmission apparatus is shown in FIG. 23. A data transmission apparatus 2300 includes a transceiver unit 231.

The transceiver unit 231 is configured to send a first frame, where the first frame indicates that a first station is allowed to perform access in a transmission opportunity shared by the data transmission apparatus. The transceiver unit 231 is further configured to receive a first response frame sent by the first station.

Optionally, the first frame is a multi-user request to send transmission opportunity sharing MU-RTS TXS trigger frame. The first frame includes a first field. When the first field is a first value, it indicates that the first station is allowed to perform access in the transmission opportunity.

Optionally, the first field is a transmission opportunity sharing mode field.

Optionally, the first frame further includes a second field. The second field includes at least one of the following: an identifier of the scheduled first station, an identifier of a scheduled station group, information about a service allowed to be transmitted in the transmission opportunity, and an indication indicating whether point-to-point transmission is allowed to be performed in the transmission opportunity.

Optionally, the information about the service allowed to be transmitted in the transmission opportunity includes at least one of the following: an identifier of the service allowed to be transmitted in the transmission opportunity, and a tolerable delay threshold of the service allowed to be transmitted in the transmission opportunity.

All related content of each step involved in the foregoing method embodiment may be referenced to a function description of a corresponding functional module, and details are not described herein again.

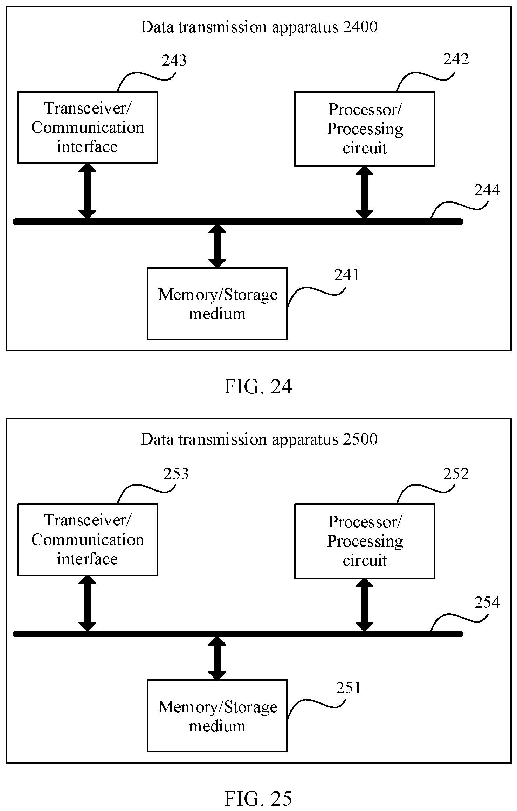

FIG. 24 is a structural diagram of a possible product form of a data transmission apparatus according to an embodiment of this application.

In a possible product form, a data transmission apparatus 2400 includes a processor 242 and a transceiver 243. The processor 242 is configured to perform a function of the processing unit 221 in the foregoing embodiment. The transceiver 243 is configured to perform a function of the transceiver unit 222 in the foregoing embodiment.

Optionally, the data transmission apparatus 2400 may further include a memory 241.

In another possible product form, a data transmission apparatus 2400 is alternatively implemented by a general-purpose processor, that is, a commonly known chip. The general-purpose processor includes a processing circuit 242 and a communication interface 243. Optionally, the general-purpose processor may further include a storage medium 241.

The processing circuit 242 is configured to perform a function of the processing unit 221 in the foregoing embodiment. The communication interface 243 is configured to perform a function of the transceiver unit 222 in the foregoing embodiment.

In another possible product form, the foregoing data transmission apparatus may alternatively be implemented through one or more field programmable gate arrays (field programmable gate arrays, FPGAs), a programmable logic device (programmable logic device, PLD), a controller, a state machine, gate logic, a discrete hardware component, any other suitable circuit, or any combination of circuits capable of performing various functions described throughout this application.

The processor 242 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. A bus 244 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 24, but this does not mean that there is only one bus or only one type of bus.

FIG. 25 is a structural diagram of a possible product form of a data transmission apparatus according to an embodiment of this application.

In a possible product form, a data transmission apparatus 2500 includes a processor 252 and a transceiver 253.

The transceiver 253 is configured to perform a function of the transceiver unit 231 in the foregoing embodiment.

Optionally, the data transmission apparatus may further include a memory 251.

In another possible product form, a data transmission apparatus 2500 is alternatively implemented by a general-purpose processor, that is, a commonly known chip. The general-purpose processor includes a processing circuit 252 and a communication interface 253. Optionally, the general-purpose processor may further include a storage medium 251.

The communication interface 253 is configured to perform a function of the transceiver unit 231 in the foregoing embodiment.

In another possible product form, the data transmission apparatus may alternatively be implemented by using one or more FPGAs, a PLD, a controller, a state machine, gate logic, a discrete hardware component, any other suitable circuit, or any combination of circuits capable of performing various functions described throughout this application.

The processor 252 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. A bus 254 may be a PCI bus, an EISA bus, or the like. The bus may be classified into an address bus, a data bus, a control bus, and the like. For ease of representation, only one thick line is used to represent the bus in FIG. 25, but this does not mean that there is only one bus or only one type of bus.

A person of ordinary skill in the art may understand that all or some of the steps of the method embodiments may be implemented by hardware relevant to program instructions. The program instructions may be stored in a computer-readable storage medium. When the program instructions are executed, the steps of the method embodiments are performed. The foregoing storage medium includes any medium that can store program code, for example, a USB flash drive, a removable hard disk, a ROM, a RAM, a magnetic disk, or an optical disc.

According to one aspect, an embodiment of this application further provides a readable storage medium. The readable storage medium stores computer-executable instructions. A device (which may be a single chip, a chip, a controller, or the like) or a processor performs the steps in the communication method provided in this application.

In one aspect, an embodiment of this application further provides a computer program product. The computer program product includes computer-executable instructions, and the computer-executable instructions are stored in a computer-readable storage medium. A processor of a device may read the computer-executable instructions from the computer-readable storage medium, and the processor executes the computer-executable instructions, so that the device performs the steps in the communication method provided in this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, division into the units is merely logical function division and may be another division in actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

All or some of the foregoing embodiments may be implemented through software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center that integrates one or more usable media. The usable medium may be a read-only memory (read-only memory, ROM); a random access memory (random access memory, RAM); a magnetic medium, for example, a floppy disk, a hard disk, a magnetic tape, or a magnetic disk; an optical medium, for example, a digital versatile disc (digital versatile disc, DVD); a semiconductor medium, for example, a solid-state disk (solid-state disk, SSD); or the like.

## Claims

1. A data transmission method, wherein the method comprises:
receiving, by a first station, a first frame sent by a second station, wherein the first frame indicates that the first station is allowed to perform access in a transmission opportunity shared by the second station;
sending, by the first station, a first response frame in response to the first frame; and
performing, by the first station, channel contention in the transmission opportunity.

2. A data transmission method, wherein the method comprises:
sending, by a second station, a first frame, wherein the first frame indicates that a first station is allowed to perform access in a transmission opportunity shared by the second station; and
receiving, by the second station, a first response frame sent by the first station.

3. The method according to claim 1 or 2, wherein the first frame is a multi-user request to send transmission opportunity sharing MU-RTS TXS trigger frame; the first frame comprises a first field; and when the first field is a first value, it indicates that the first station is allowed to perform access in the transmission opportunity.

4. The method according to claim 3, wherein the first field is a transmission opportunity sharing mode field.

5. The method according to any one of claims 1 to 4, wherein the first frame further comprises a second field; and
the second field comprises at least one of the following: an identifier of the scheduled first station, an identifier of a scheduled station group, information about a service allowed to be transmitted in the transmission opportunity, and an indication indicating whether point-to-point transmission is allowed to be performed in the transmission opportunity.

6. The method according to claim 5, wherein the information about the service allowed to be transmitted in the transmission opportunity comprises at least one of the following: an identifier of the service allowed to be transmitted in the transmission opportunity, and a tolerable delay threshold of the service allowed to be transmitted in the transmission opportunity.

7. The method according to any one of claims 1 and claims 3 to 6, wherein the method further comprises:
setting, by the first station, a value of an intra-basic service set network allocation vector intra-BSS NAV to 0.

8. The method according to claim 7, wherein
the sending, by the first station, a first response frame in response to the first frame comprises:
sending, by the first station, the first response frame after a short inter-frame space starting from a moment of receiving the first frame.

9. The method according to claim 7, wherein
the method further comprises:
receiving, by the first station, a second response frame sent by a third station, and skipping setting the intra-BSS NAV based on the second response frame; and
the performing, by the first station, channel contention in the transmission opportunity comprises:
when it is detected that a channel is idle, and a value of the basic NAV is 0, performing, by the first station, channel contention in the transmission opportunity.

10. The method according to claim 8, wherein the performing, by the first station, channel contention in the transmission opportunity comprises:
starting, by the first station, a first timer, wherein an initial value of the first timer is first duration indicated by a duration (Duration) field of the first frame; and
performing, by the first station, channel contention when a value of the first timer is not equal to 0, and stopping transmission when the value of the first timer is 0.

11. The method according to any one of claims 1 and claims 3 to 9, wherein the method further comprises:
performing, by the first station, channel contention in second duration, and stopping transmission before the second duration ends, wherein
a duration (Duration) field of the first frame further indicates the second duration; or
the first frame further comprises a third field, and the third field indicates the second duration.

12. The method according to any one of claims 1, 3 to 9, and 11, wherein the first frame further comprises the third field and the duration (Duration) field; the third field indicates the second duration allocated to the first station for performing channel contention in the transmission opportunity, and the duration field indicates first duration; the first duration is duration corresponding to the transmission opportunity shared by the second station, and the first duration is greater than or equal to the second duration; and the method further comprises:
starting, by the first station, a second timer, wherein an initial value of the second timer is equal to the first duration, and setting the intra-BSS NAV to 0; and
disallowing, by the first station, to initiate channel contention after the second duration ends and when a value of the second counter is not equal to 0.

13. The method according to claim 1, wherein the performing, by the first station, channel contention in the transmission opportunity comprises:
in second duration allocated to the first station for performing channel contention in the transmission opportunity, if values of a basic NAV and an intra-BSS TXS NAV are both equal to 0, and a channel sensing result is idle, allowing the first station to perform channel contention, wherein the intra-BSS TXS NAV is different from the intra-BSS NAV, wherein
the duration field further indicates the second duration; or
the first frame further comprises a third field, and the third field indicates the second duration.

14. The method according to claim 13, wherein the method further comprises:
after receiving the first frame, starting, by the first station, an intra-BSS TXS NAV timer, wherein the intra-BSS TXS NAV timer is initialized to 0; and
if the first station receives an intra-BSS PPDU in the second duration, and duration indicated by a duration field of the intra-BSS PPDU is greater than duration of the intra-BSS TXS NAV, updating the intra-BSS TXS NAV based on a value of the duration field of the intra-BSS PPDU.

15. The method according to claim 14, wherein the method further comprises:
receiving, by the first station, a second response frame sent by a third station, and skipping setting the intra-BSS TXS NAV based on the second response frame; and
the performing, by the first station, channel contention in the transmission opportunity comprises:
when it is detected that a channel is idle, and the values of the basic NAV and the intra-BSS TXS NAV are both 0, performing, by the first station, channel contention in the transmission opportunity.

16. A data transmission apparatus, wherein the apparatus is configured to implement the method according to any one of claims 1 and 3 to 15, or the apparatus is configured to implement the method according to any one of claims 2 to 6.

17. A data transmission apparatus, comprising a processor, wherein the processor is coupled to a memory, and the processor is configured to read instructions in the memory, to implement the method according to any one of claims 1 and 3 to 15, or implement the method according to any one of claims 2 to 6.

18. A computer-readable storage medium, wherein the computer-readable storage medium stores a computer program; and when the program is executed by a processor, the method according to any one of claims 1 and 3 to 15 is implemented, or the method according to any one of claims 2 to 6.

19. A computer program product, configured to: when executed on a computing device, perform the method according to any one of claims 1 and 3 to 15, or perform the method according to any one of claims 2 to 6.
